# EUROPÄISCHE PATENTSCHRIFT

(11) **EP 3 096 859 B1**
(45) Veröffentlichungstag und Bekanntmachung des Hinweises auf die Patenterteilung: **11.03.2020**
(21) Anmeldenummer: 15703236.8
(22) Anmeldetag: 21.01.2015
(51) Int. Cl.: B01D 35/16, B01D 27/08, B01D 27/10

(54) **FILTERELEMENT**
FILTER ELEMENT
ÉLÉMENT DE FILTRATION

(30) Priorität: 23.01.2014 DE 102014000715
(43) Veröffentlichungstag der Anmeldung: 30.11.2016
(73) Patentinhaber: Mann+Hummel GmbH, 71636 Ludwigsburg (DE)
(72) Erfinder: PFLÜGER, Frank, 74343 Sachsenheim (DE); HASENFRATZ, Robert, 74523 Schwäbisch Hall (DE); WAGNER, Fabian, 71696 Möglingen (DE); RÖSGEN, André, 73630 Remshalden (DE); THALMANN, Christian, 67346 Speyer (DE)
(74) Vertreter: Seyboth, Matthias
(86) Internationale Anmeldenummer: PCT/EP2015/051151
(87) Internationale Veröffentlichungsnummer: WO 2015/110475

(56) Entgegenhaltungen:
- DE-A1-102009 030 561
- US-A- 4 832 844
- US-A- 6 096 208
- US-A1- 2009 127 198

## Beschreibung

### Technisches Gebiet

Die Erfindung betrifft ein Filterelement zum Filtern eines Fluids sowie ein Filtersystem mit einem Filterelement, insbesondere einen wechselbaren Ölfilter eines Kraftfahrzeugs.

### Stand der Technik

Filtereinrichtungen, insbesondere Ölfilter für Brennkraftmaschinen von Kraftfahrzeugen, besitzen üblicherweise ein Filterelement, mittels welchem eine die Filtereinrichtung durchströmende Flüssigkeit gefiltert wird. Turnusgemäß muss dieses Filterelement ausgetauscht werden, um die Filterwirkung der Filtereinrichtung stets gewährleisten zu können. Das Filterelement wird durch Abnahme einer Filtereinrichtung, beispielsweise von einer Brennkraftmaschine, mit entfernt. Aufgrund der stetig steigenden Umweltauflagen muss dabei der Austausch des Filterelementes möglich sein, ohne dass Flüssigkeit, insbesondere Öl, in die Umgebung gelangt.

Die DE 10 2009 030 503 A1 beschreibt eine solche abnehmbare Filtereinrichtung, welche ein automatisches Öffnen bzw. Verschließen eines Leerlaufkanales beim Aus- bzw. Einbau einer Filtereinrichtung ermöglicht, damit die Umgebung beim Tausch der Filtereinrichtung nicht durch auslaufendes Öl verunreinigt wird. Die Filtereinrichtung wird auf die Brennkraftmaschine aufgeschraubt und mit einer flachen O-Ring-Dichtung gedichtet.

Zur Gewichts- und Kostenreduktion werden solche Filter in verstärktem Maße in Kunststoff hergestellt. Dabei bietet sich thermoplastischer Kunststoff und das Spritzgießverfahren an. Das Fließverhalten von thermoplastischem Kunststoff auch nach dem Aushärten, d. h. also während der Betriebszeit des Filters, macht es erforderlich, dass spezielle konstruktive Maßnahmen ergriffen werden, um Dichtheitsprobleme zu vermeiden.

EP 0 930 928 81 beschreibt ein Filterelement, bei dem dies dadurch erzielt wurde, dass die Dichtung beim Verschließen eines Gehäuses mit einem Deckel sowohl axiale als auch radiale Kräfte aufnimmt und damit auch Dichtwirkung in axialer und radialer Richtung entfaltet. Durch den Flüssigkeitsdruck im Inneren des Gehäuses erhöhen sich die radiale Dichtungswirkung und das Abdichtungsverhalten. Außerdem ist der Deckel mit einer Dichtungsnut versehen, in welchem sich die Dichtung, welche kein besonderes Profil aufweist, befindet. Am Gehäuse ist ein Ansatz mit einer schrägverlaufenden Stirnfläche angeordnet. Die schrägverlaufende Stirnfläche wirkt auf die Dichtung ein und erzeugt damit die radiale und axiale Dichtungswirkung.

US 6 096 208 A betrifft einen Wechselfilter, der über ein an einer Deckelplatte vorhandenes Verbindungsgewinde mit einem Filterkopf verschraubbar ist. In einem radial außenliegenden Bereich liegt eine in einen Deckelrand eingebördelte Dichtungsaufnahme vor, in der eine Dichtung aufgenommen ist. Radial außen liegt die Dichtung an einer inneren Mantelfläche der Dichtungsaufnahme an, während sie radial innen von einem filterkopfseitig einragenden Ringbund radial und axial verpresst wird. Bei der Dichtung handelt es sich um einen O-Ring mit kreisförmigem Querschnitt.

In US 4 832 844 A wird ein Wechselfilter offenbart, der an seiner Deckelseite in einer umlaufenden Ringnut der Stirnfläche eine im Wesentlichen Z-förmige Dichtung aufweist, deren einer Schenkel eine Abdichtung in Radialrichtung und der andere Schenkel in Axialrichtung bewirkt.

DE 10 2009 030 561 A1 betrifft einen Wechselfilter, der an einem Stirnflächenabschnitt der Deckelplatte eine Axialdichtung aufweist. Der Wechselfilter hat ferner einen axialen Fortsatz, wobei sich über einen Teil dessen Länge ein korrespondierender zylindrischer Fortsatz der Dichtung erstreckt, der beim Herausschrauben des Wechselfilters ein Auslaufen der Ölfüllung des Filterkopfes verhindern soll.

Schließlich wird in der US 2009/127198 A1 eine Filtervorrichtung beschrieben, bei der die Dichtung auf eine umlaufende Außenkante einer Endscheibe des Filterelements aufgezogen ist. Die Dichtung hat radial außenseitig eine verrundete Querschnittsform und wird in einem Montagezustand zwischen einer offenen Seite des Filtertopfs und einem Gegenabschnitt des Filterkopfs verpresst.

Die Aufgabe der Erfindung ist daher, ein Filterelement so auszubilden, dass eine zuverlässige Dichtheit des Filterelements im Betrieb, insbesondere nach einem Austausch des Filterelements bei einer Wartung, dargestellt werden kann.

Eine weitere Aufgabe der Erfindung ist es, ein Filtersystem zur Aufnahme eines solchen wechselbaren Filterelements zu schaffen, welches eine zuverlässige Dichtheit des Filterelements im Betrieb, insbesondere nach einem Austausch des Filterelements bei einer Wartung, darstellen kann.

### Offenbarung der Erfindung

Die vorgenannten Aufgaben werden nach einem Aspekt der Erfindung bei einem Filterelement zum Filtern eines Fluids gelöst, das ein Gehäuse, einen in dem Gehäuse angeordneten Filterkörper, einen das Gehäuse verschließenden Deckel umfasst, wobei an dem Deckel mindestens ein Einlass auf einer Rohseite zum Einlassen eines Fluids in das Filterelement und ein Auslass auf einer Reinseite zum Abführen des Fluids aus dem Filterelement angeordnet sind, und wobei an dem Deckel ein Verbindungsbereich zum Verbinden des Filterelements mit einem Gegenelement eines Filtersystems sowie ein Abdichtbereich zwischen Filterelement und einer Aufnahme des Filtersystems vorgesehen sind.

Nach einem anderen Aspekt der Erfindung wird die Aufgabe gelöst durch ein Filtersystem mit einem Filterelement, wobei das Filterelement mit einem Verbindungsbereich wechselbar mit einer Aufnahme des Filtersystems verbunden ist und wobei ein Einlass auf einer Rohseite vorgesehen ist, der mit dem Einlass des Filterelements verbunden ist, sowie ein Auslass vorgesehen ist, der mit dem Auslass des Filterelements auf einer Reinseite verbunden ist

Günstige Ausgestaltungen und Vorteile der Erfindung ergeben sich aus den weiteren Ansprüchen, der Beschreibung und der Zeichnung.

Es wird ein Filterelement zum Filtern eines Fluids vorgeschlagen, umfassend ein Gehäuse, ein in dem Gehäuse angeordneter Filterkörper, einen das Gehäuse verschließenden Deckel, wobei an dem Deckel mindestens ein Einlass auf einer Rohseite zum Einlassen eines Fluids in das Filterelement und ein Auslass auf einer Reinseite zum Abführen des Fluids aus dem Filterelement angeordnet sind, wobei an dem Deckel ein Verbindungsbereich zum Verbinden des Filterelements mit einem Gegenelement eines Filtersystems sowie ein Abdichtbereich zwischen Filterelement und einer Aufnahme des Filtersystems vorgesehen sind, und mit wenigstens einer umlaufenden Dichtung zur Abdichtung des Verbindungsbereichs angeordnet sind, wobei die Dichtung wenigstens zwei getrennte Dichtungsflächen aufweist, die eine Dichtwirkung in axialer und radialer Richtung bewirken.

Das vorgeschlagene Filterelement kann leicht gewechselt werden, da der Verbindungsbereich zum Verbinden des Filterelements mit einem entsprechenden Gegenelement in der Aufnahme eines Filtersystems als Sägezahngewinde in der Gewindekontur ausgeführt sein kann, das mit wenigen Umdrehungen gelöst werden kann. In dem Fall stellt auch das Gegenelement ein Gegengewinde dar. Von Vorteil ist, dass der Deckel vorzugsweise aus Kunststoff gefertigt sein kann, insofern mit hoher Freiheit gestaltbar ist. Das Gehäuse ist üblicherweise aus einem metallischen Werkstoff, wie beispielsweise Stahlblech, hergestellt, kann jedoch auch aus Kunststoff gefertigt werden. Alternativ kann der Verbindungsbereich auch als Bajonettverbindung gestaltet sein, die über eine Drehung über einen kleinen Winkelbereich, beispielsweise in der Größenordnung von 120° lösbar ist. Außerdem kann die Bajonettverbindung eine Rastfunktion beinhalten, sodass auch dadurch ein kombinierter Form- und Kraftschluss zur festen Verbindung des Filterelements mit einem Gegenelement in der Aufnahme eines Filtersystems zustande kommt. Auch ein Gewinde kann eine Kombination aus Form- und Kraftschluss herstellen. Ein Abdichtbereich für die Verbindung von Filterelement und Aufnahme des Filtersystems kann bei einem Kunststoffdeckel und entsprechender Kunststoffaufnahme einfach gestaltet und in Kunststoffspritzgusstechnik dargestellt werden.

Erfindungsgemäß weist die Dichtung einen Bereich mit im Wesentlichen einem ovalen Querschnitt auf. Solcherart gestaltete Dichtungen lassen sich mit mehreren Dichtflächen zuverlässiger und dauerhafter abdichten als übliche O-Ring-Dichtungen. Die Herstellung in üblicher Spritzgusstechnik stellt ebenfalls kein Problem dar, Dichtungen mit nicht symmetrischen Formen darzustellen.

Erfindungsgemäß ist die Dichtung in radialer Richtung gesehen auf einer Seite konvex und auf gegenüberliegender Seite im Wesentlichen flach ausgebildet. Auf diese Weise kann sich die Dichtung an einer flachen Rückwand anlegen und gleichzeitig aber über zwei schräg zueinander verlaufende Dichtflächen wirksam verpresst werden. Damit ist eine besonders zuverlässige Dichtheit über die Betriebsdauer eines Wechselintervalls beispielsweise beim Filterelement eines Ölfilters darstellbar.

In einer vorteilhaften Ausgestaltung kann die Dichtung angrenzend an den im Wesentlichen ovalen Bereich einen in axialer Richtung erstreckenden Bund aufweisen. Durch einen langgestreckten radialen Dichtbereich arbeitet der Bund als Auslaufschutzmembran bei der Demontage des Filterelementes und verhindert somit ein Austreten des Fluides, solange bei der Demontage der Ölablauf noch verschlossen ist.

Wie bereits oben dargestellt, kann der Verbindungsbereich ein Gewinde umfassen, um so eine leichte Wechselmöglichkeit des Filterelements im Wartungsfall darzustellen und gleichzeitig die Dichtheit eines ausgewechselten Filterelements nach Wiedereinbau zuverlässig wiederherzustellen. Auch sind Gewinde gerade bei rauen Einsatzbedingungen wie bei Kraftfahrzeugen und/oder Landmaschinen besonders zuverlässig im Gebrauch. Dabei sind beide Varianten von Gewinden, Außen- wie auch Innengewinde, in der Realisierung denkbar.

Erfindungsgemäß ist die Dichtung von einer umlaufenden Führung in axialer und radialer Richtung geführt, die mit einem Bund des Gehäuses dicht abschließt. Wenn die Dichtung in einer Führung liegt, kann besser gewährleistet werden, dass sie beim Einbau des Filterelements und Verschrauben in der Aufnahme eines Filtersystems nicht beschädigt wird, da sie allein durch die Form der Führung in Position gehalten werden kann. Auch kann sie beim Wechsel eines Filterelements nicht verloren gehen, was gerade beim Einsatz in rauen Bedingungen wie Werkstätten und/oder im Landmaschinenbereich von großem Vorteil ist. Im Fall eines runden Filterelements wird deshalb die Führung vorteilhafterweise auch um das Gehäuse umlaufend ausgeführt sein.

Günstigerweise ist beim Einsatz einer solchen Führung eine erste Dichtfläche zur Anlage an der umlaufenden Führung angeordnet. Dadurch kann gewährleistet werden, dass die Dichtfunktion über diese Dichtfläche zuverlässig dargestellt wird, da die Gefahr, dass Verschmutzung oder Fremdgegenstände die Dichtfunktion beeinträchtigen, minimiert wird.

Durch den Einsatz eines Kunststoffdeckels ist es leicht möglich, einen Ablauf zum Leerlaufen des Filterelements bei einer Entnahme aus der Aufnahme des Filtersystems mit zu integrieren. Das Filterelement wird durch Abnahme des Filterelements aus der Aufnahme eines Filtersystems entfernt. Aufgrund der stetig steigenden Umweltauflagen muss dabei der Austausch des Filterelements möglich sein, ohne dass Flüssigkeit, insbesondere Öl, in die Umgebung gelangt. Aus diesem Grunde besitzen herkömmliche Filtersysteme in ihrem Gehäuse neben einem Einlasskanal, der mit einer Rohseite des Filterelements kommuniziert und einem Auslasskanal der mit einer Reinseite des Filterelements kommuniziert, auch einen Ablauf, durch den ein Aufnahmeraum, in welchem der Filterkörper angeordnet ist, beim Abschrauben des Filterelements entleerbar ist. Selbstverständlich muss dieser Ablauf bei betriebsbereitem Filtersystem verschlossen sein, da ansonsten die Reinseite und die Rohseite des Filterelements miteinander kurzgeschlossen werden würden und dadurch das Filtersystem seine Filterwirkung nicht entfalten könnte.

Günstigerweise kann deshalb der Verbindungsbereich in radialer Richtung außerhalb des Ablaufs auf der Reinseite angeordnet sein, sodass keine Verschmutzung beim Wechsel des Filterelements auf die Reinseite gelangen kann.

Ganz besonders günstig kann dabei der Verbindungsbereich in radialer Richtung außerhalb eines Innendurchmessers des Filterkörpers angeordnet sein. Dadurch wird die Gefahr von Verschmutzung der Reinseite beim Wechsel weiter minimiert. Auch ergibt sich so auf Grund des großen Querschnitts beim Filtern des Fluids ein geringer Druckverlust durch das Filterelement, was die Effizienz des Filtersystems erhöht.

Vorteilhafterweise kann das vorgeschlagene Filterelement zum Filtern von Öl eingesetzt werden.

Ebenfalls ist die Verwendung des Filterelements zum Filtern von Kraftstoff denkbar.

Generell ist der Einsatz eines vorgeschlagenen Filterelements jedoch auch für andere Arten von Fluidfiltern möglich und vorteilhaft.

Die Erfindung betrifft nach einem weiteren Aspekt ein Filtersystem mit einem Filterelement, wobei das Filterelement mit einem Verbindungsbereich wechselbar mit einer Aufnahme des Filtersystems verbunden ist und wobei ein Einlass auf einer Rohseite vorgesehen ist, der mit dem Einlass des Filterelements verbunden ist, sowie ein Auslass vorgesehen ist, der mit dem Auslass des Filterelements auf einer Reinseite verbunden ist. Die vorgeschlagene Art, das Filterelement mit der Aufnahme des Filtersystems zu verbinden und abzudichten, gewährleistet, dass eine leichte Wechselbarkeit im Wartungsfall dargestellt werden kann und dass die Dichtheit des Filtersystems auch nach Austausch des Filterelements leicht und zuverlässig wiederhergestellt werden kann. Die Zuverlässigkeit von Fluidfiltern stellt gerade im rauen Einsatz bei Brennkraftmaschinen und Kraftfahrzeugen einen wichtigen Aspekt dar.

Vorteilhafterweise kann eine aufnahmeseitige Dichtfläche an der Aufnahme des Filtersystems angeordnet sein, die zur Anlage einer zweiten Dichtungsfläche der Dichtung vorgesehen ist. Auch damit kann die Zuverlässigkeit der Dichtungsfunktion des Filtersystems weiter erhöht und über eine lange Betriebsdauer gewährleistet werden.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: ein Filterelement mit einem Innengewinde zusammen mit einer dazu passenden Aufnahme eines Filtersystems nach einem Ausführungsbeispiel der Erfindung für die Ölfilterung in einem Kraftfahrzeug;
- Fig. 2: ein Filtersystem nach Figur 1 in montiertem Zustand;
- Fig. 3: eine Detailansicht eines gewindeseitigen Endes eines Filterelements nach Figur 1;
- Fig. 4: eine vergrößerte Detailansicht eines Gewindebereichs eines Filterelements nach Figur 1;
- Fig. 5: eine Aufnahme eines Filtersystems nach einem Ausführungsbeispiel der Erfindung;
- Fig. 6: ein Filtersystem mit einem Filterelement mit einem Außengewinde nach einem weiteren Ausführungsbeispiel der Erfindung.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

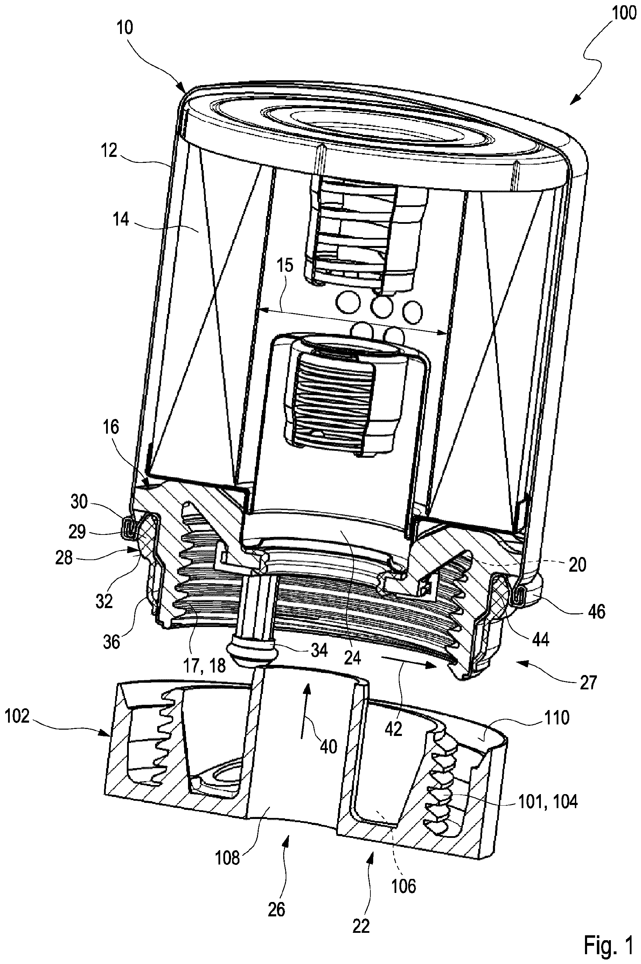

Die Erfindung ist in den Figuren 1 bis 6 anhand eines Ölfilters dargestellt, kann jedoch auch für andere Filtersysteme mit entsprechender Anpassung der Konstruktion vorgesehen sein.

Figur 1 zeigt ein Filterelement 10 mit einem Innengewinde 18 zusammen mit einer dazu passenden Aufnahme 102 eines Filtersystems 100 nach einem Ausführungsbeispiel der Erfindung für die Ölfilterung in einem Kraftfahrzeug. Das Filterelement 10 zum Filtern eines Fluids, in dem gezeigten Ausführungsbeispiel Öl, umfasst ein Gehäuse 12, ein in dem Gehäuse 12 angeordneter Filterkörper 14, sowie einen das Gehäuse 12 verschließenden Deckel 16, der als Kunststoffdeckel ausgeführt ist. An dem Deckel 16 ist ein Einlass 20 auf einer Rohseite 22 zum Einlassen eines Fluids in das Filterelement 10 und ein Auslass 24 auf einer Reinseite 26 zum Abführen des Fluids aus dem Filterelement 10 angeordnet. An dem Deckel 16 ist ein Verbindungsbereich 17 zum Verbinden des Filterelements 10 mit einem Gegenelement 101 eines Filtersystems 100 sowie ein Abdichtbereich 27 zwischen Filterelement 10 und einer Aufnahme 102 des Filtersystems 100 vorgesehen. In dem Abdichtbereich ist eine umlaufende Dichtung 28 zur Abdichtung des Verbindungsbereichs 17 angeordnet, wobei die Dichtung 28 zwei getrennte Dichtungsflächen 30, 32 aufweist, die eine Dichtwirkung in axialer und radialer Richtung 40, 42 bewirken.

Die Dichtung 28 weist einen Bereich 29 mit im Wesentlichen einem ovalen Querschnitt auf, wobei die Dichtung 28 in radialer Richtung 42 gesehen auf einer Seite konvex und auf gegenüberliegender Seite im Wesentlichen flach ausgebildet ist. Mit der flachen Seite liegt die Dichtung 28 an der Außenwand des Verbindungsbereichs auf. Die Dichtung 28 weist weiter angrenzend an den im Wesentlichen ovalen Bereich 29 einen in axialer Richtung 40 erstreckenden Bund 36 auf, mit dem eine zusätzliche Dichtfunktion beim Verbinden des Filterelements mit der Aufnahme 102 erzielbar ist.

In dem gezeigten Ausführungsbeispiel umfasst der Verbindungsbereich 17 ein Gewinde 18, sowie das entsprechende Gegenelement 101 als Gegengewinde 104. Alternativ könnte der Verbindungsbereich 17 jedoch auch als Bajonettverbindung mit entsprechendem Gegenelement 101 ausgestaltet sein.

Die Dichtung 28 wird von einer umlaufenden Führung 44 in axialer und radialer Richtung 40, 42 geführt, die mit einem Bund 46 des Gehäuses 12 dicht abschließt. Dieser Bund 46 ist günstigerweise eine Fortsetzung des Gehäusemantels und umschließt die Führung 44 in einer Bördelung, um so die Dichtheit des Gehäuses 12 zu gewährleisten. Zusätzlich kann diese Verbindungsnaht noch mit einer Dichtmasse abgedichtet sein. Eine erste Dichtfläche 30 der Dichtung 28 ist dabei zur Anlage an der umlaufenden Führung 44 angeordnet und gewährleistet so eine verschmutzungs- und beschädigungsfreie Dichtfläche. Eine aufnahmeseitige Dichtfläche 110 ist an der Aufnahme 102 des Filtersystems 100 angeordnet, und ist zur Anlage einer zweiten Dichtungsfläche 32 der Dichtung 28 vorgesehen.

Der Deckel 16 weist einen Ablauf 34 zum Leerlaufen des Filterelements 10 bei einer Entnahme aus der Aufnahme 102 des Filtersystems 100 auf. Da der Deckel in Kunststofftechnik ausgeführt ist, kann auch ein solcher Ablauf 34 leicht dargestellt werden.

Durch den Ablauf 34 ist ein Aufnahmeraum, in welchem der Filterkörper 14 angeordnet ist, beim Abschrauben des Filterelements 10 entleerbar, ohne dass die Reinseite 26 dabei verschmutzt wird.

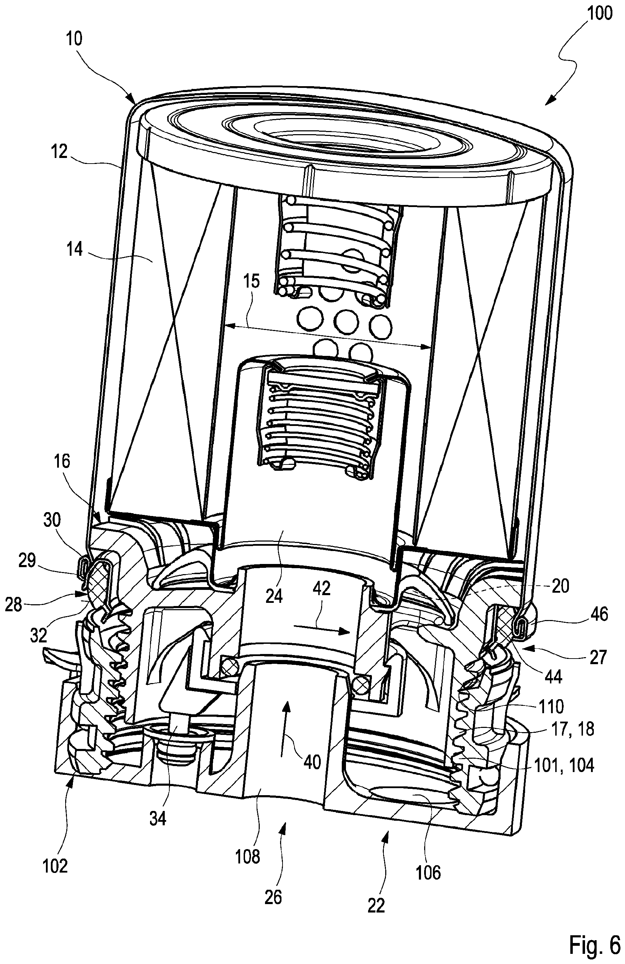

Wird der Ablauf 34 als Verschluss-Pin ausgeführt, so ist dieser vorzugsweise drehbar als separates Bauteil am Deckel angeordnet. In einer besonders vorteilhaften Ausführung bildet der Ablauf wie in Figur 6 eine Begrenzung einer Dichtungskammer.

Der Verbindungsbereich 17 ist in radialer Richtung 42 außerhalb des Ablaufs 34 auf der Reinseite 26 angeordnet, um so zu gewährleisten, dass die Reinseite 26 beim Wechsel des Filterelements 10 und damit der Entnahme aus dem Filtersystem 100 nicht verschmutzt wird. Dazu dient auch, dass der Verbindungsbereich 17 in radialer Richtung 42 außerhalb eines Innendurchmessers 15 des Filterkörpers 14 angeordnet ist. Weiter wird auf diese Weise auch ein möglichst geringer Druckverlust beim Betrieb des Filtersystems 100 erzielt.

Das in Figur 1 dargestellte Ausführungsbeispiel zeigt eine Verwendung des Filterelements zum Filtern von Öl. In einer anderen Ausführungsform ist jedoch eine Verwendung des Filterelements zum Filtern von Kraftstoff ebenso darstellbar.

In dem dargestellten Filtersystem 100 mit einem Filterelement 10 ist das Filterelement 10 mit einem Verbindungsbereich 17 wechselbar mit einer Aufnahme 102 des Filtersystems 100 verbunden. Dabei ist ein Einlass 106 auf einer Rohseite 22 vorgesehen, der mit dem Einlass 20 des Filterelements 10 verbunden ist, sowie ein Auslass 108 vorgesehen, der mit dem Auslass 24 des Filterelements 10 auf einer Reinseite 26 verbunden ist.

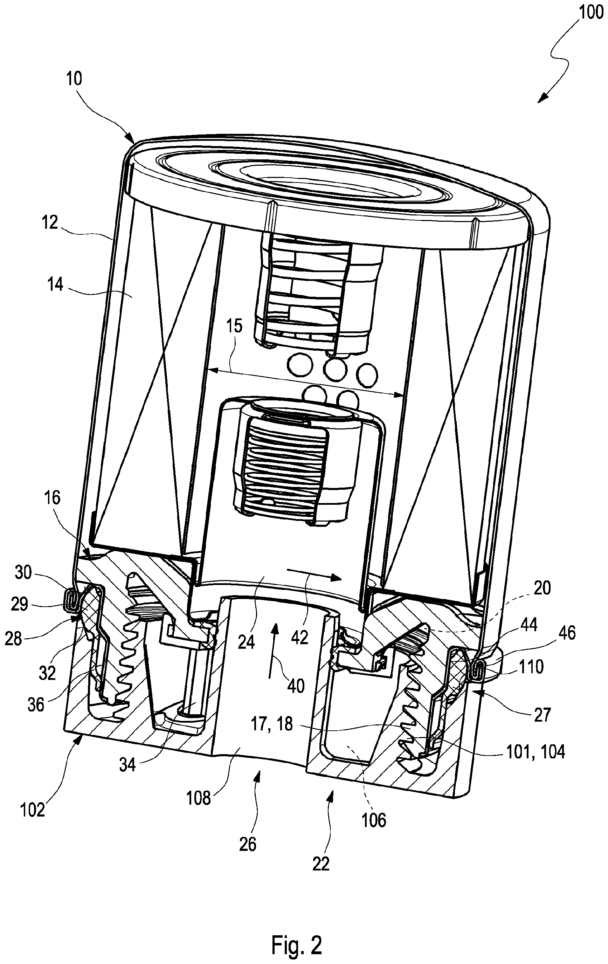

Figur 2 stellt das Filtersystem 100 nach Figur 1 in montiertem Zustand dar. Dabei ist das Filterelement 10 über das Gewinde 18 in das Gegengewinde 104 der Aufnahme 102 eingeschraubt worden. Die Dichtung 28 wird unter Unterstützung durch die Führung 44 an den Dichtflächen 30 und 32 an die entsprechende Dichtfläche der Führung 44 sowie der Dichtfläche 110 der Aufnahme 102 gepresst und so die Dichtheit des Filtersystems 100 hergestellt. Der Einlass 106 auf der Rohseite 22 ist mit dem Einlass 20 des Filterelements 10 verbunden, sowie der Auslass 108 mit dem Auslass 24 des Filterelements 10 auf der Reinseite 26 verbunden.

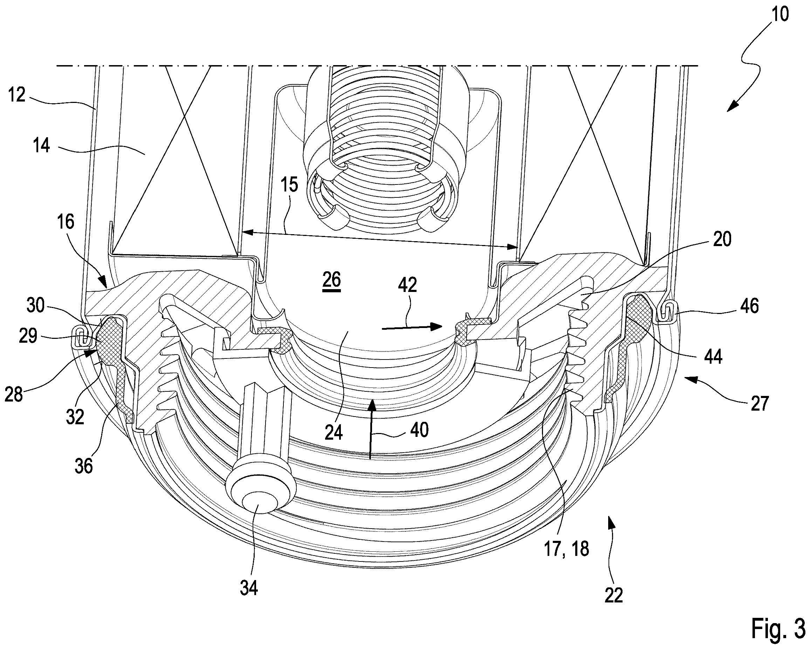

Figur 3 zeigt eine Detailansicht eines gewindeseitigen Endes eines Filterelements 10 nach Figur 1. Dabei ist die Formgebung der Dichtung 28 in ihrem ovalem Bereich 29 sowie die Ausgestaltung des Bundes 36 deutlicher zu erkennen. Weiter ist die Einbettung der Dichtung 28 in die Führung 44 zu sehen. Die Führung 44 wiederum ist in einen gebördelten Bund 46 des Gehäuses 12 gefasst, um so die Dichtheit des Gehäuses 12 zu gewährleisten. Der Querschnitt des Deckels 16 mit dem integrierten Verbindungsbereich 17 in Form eines Gewindes 18, der Einlass 20 sowie der Auslass 24, die beide in dem Deckel 16 integriert sind, ist dargestellt. Auch der Ablauf 34 zum Entleeren des Filterraums im Inneren des Filterelements 10 ist deutlich zu sehen.

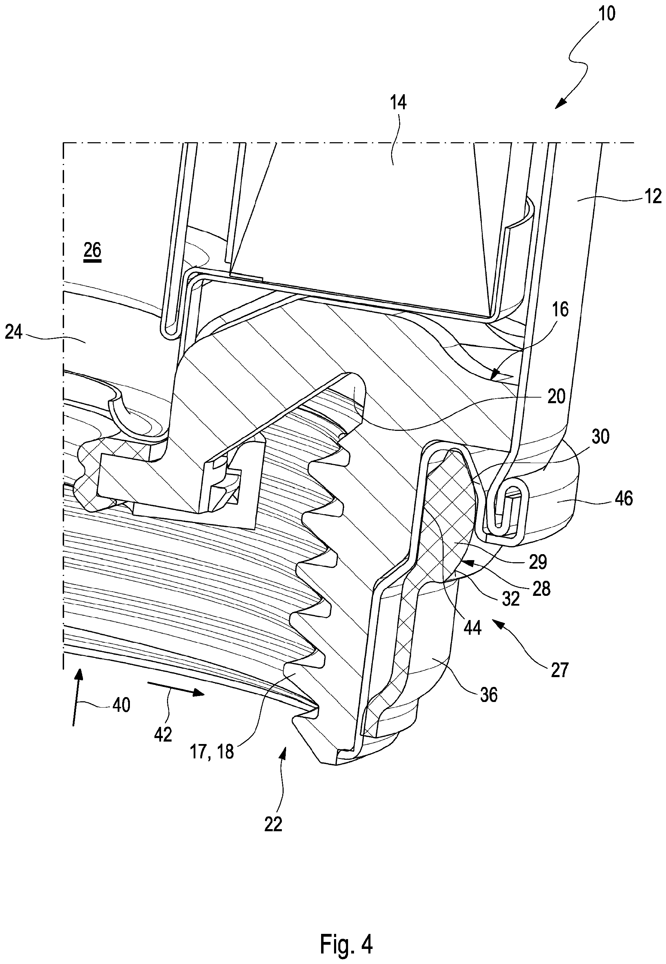

Figur 4 stellt in einer vergrößerten Detailansicht den Gewindebereich des Filterelements 10 nach Figur 1 heraus. Insbesondere die Form der Dichtung 28 in ihrem ovalen Bereich 29 mit den Dichtflächen 30, 32, dem auslaufenden Bund 36 ist zu erkennen. Weiter ist die Form der Führung 44 mit ihrer Verbindung in dem gebördelten Bund 46 des Gehäuses 12 noch deutlicher zu sehen. Der Deckel 16 ist mit einem Innengewinde 18 ausgeführt.

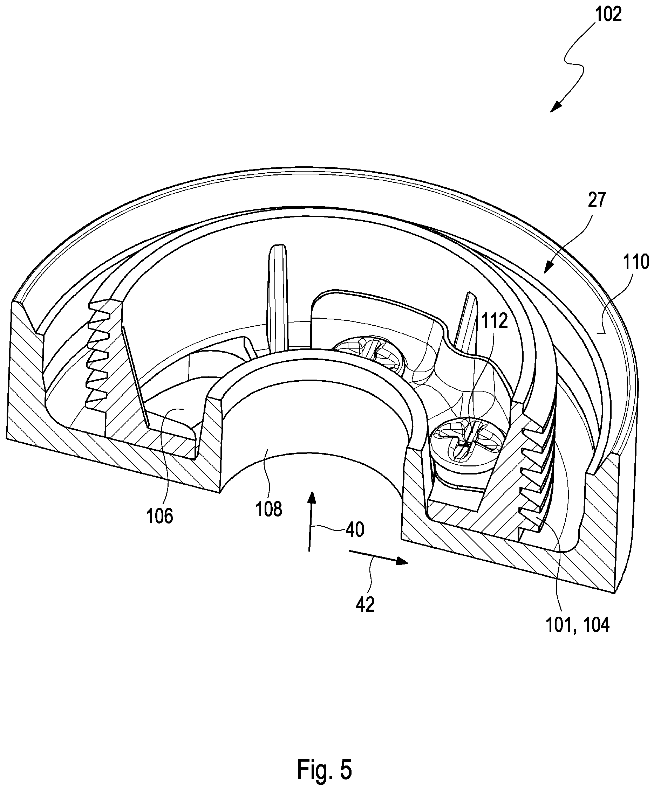

Figur 5 zeigt eine Aufnahme 102 eines Filtersystems 100 nach einem Ausführungsbeispiel der Erfindung. Die Aufnahme 102 weist als Gegenelement 101 des Verbindungsbereichs 17 eines Filterelements 10 ein Außengewinde 104 auf. Im Abdichtbereich 27 ist die schräg verlaufende Dichtfläche 110 als Anlage für die Dichtfläche 32 einer Dichtung 28 dargestellt. Weiter ist der Einlass 106 sowie der Auslass 108 für den Fluss des Fluids zu erkennen sowie eine Aufnahme 112 für einen Ablauf 34 zum Entleeren des Filterelements 10 bei der Entnahme aus der Aufnahme 102.

In Figur 6 ist ein Filtersystem 100 mit einem Filterelement 10 mit einem Außengewinde 18 nach einem weiteren Ausführungsbeispiel der Erfindung dargestellt. Die wesentlichen Merkmale des Filtersystems 100 in Figur 6 entsprechen den Merkmalen des Filtersystems 100 in den Figuren 1 bis 5. Unterschiedlich ist der Verbindungsbereich 17, der in Figur 6 ein Außengewinde 18 im Deckel 16 des Filterelements 10 aufweist, das mit einem Gegenelement 101 der Aufnahme 102 des Filtersystems 100 in Form eines Innengewindes 104 korrespondiert. Weiter weist durch die unterschiedliche Formgebung des Verbindungsbereichs 17 die Dichtung 28 keinen Bund 36 auf. So liegt die Dichtfläche 32 direkt auf der Dichtfläche 110 der Aufnahme 102 auf.

## Patentansprüche

1. Filterelement (10) zum Filtern eines Fluids, umfassend ein Gehäuse (12), ein in dem Gehäuse (12) angeordneter Filterkörper (14), einen das Gehäuse (12) verschließenden Deckel (16), wobei an dem Deckel (16) mindestens ein Einlass (20) auf einer Rohseite (22) zum Einlassen eines Fluids in das Filterelement (10) und ein Auslass (24) auf einer Reinseite (26) zum Abführen des Fluids aus dem Filterelement (10) angeordnet sind, wobei an dem Deckel (16) ein Verbindungsbereich (17) zum Verbinden des Filterelements (10) mit einem Gegenelement (101) eines Filtersystems (100) sowie ein Abdichtbereich (27) zwischen Filterelement (10) und einer Aufnahme (102) des Filtersystems (100) vorgesehen sind, und wenigstens eine umlaufende Dichtung (28) zur Abdichtung des Verbindungsbereichs (17), wobei die Dichtung (28) wenigstens zwei getrennte Dichtungsflächen (30, 32) aufweist, die eine Dichtwirkung in axialer und radialer Richtung (40, 42) bewirken, **dadurch gekennzeichnet, dass** die Dichtung (28) einen Bereich (29) mit einem im Wesentlichen ovalen Querschnitt aufweist und von einer umlaufenden Führung (44) in axialer und radialer Richtung (40, 42) geführt wird, die mit einem Bund (46) des Gehäuses (12) dicht abschließt, wobei die Dichtung (28) in radialer Richtung (42) gesehen auf einer Seite konvex und auf der gegenüberliegenden Seite im Wesentlichen flach ausgebildet ist, wobei die die Dichtung (28) mit ihrer flachen Seite an der Führung (44) anliegt und mit ihrer konvexen Seite über zwei schräg zu einander verlaufende Dichtflächen verpressbar ist.

2. Filterelement nach Anspruch 1, wobei die Dichtung (28) angrenzend an den im Wesentlichen ovalen Bereich (29) einen in axialer Richtung (40) erstreckenden Bund (36) aufweist.

3. Filterelement nach Anspruch 1 oder 2, wobei der Verbindungsbereich (17) ein Gewinde (18) umfasst.

4. Filterelement nach einem der vorhergehenden Ansprüche, wobei eine erste Dichtfläche (30) zur Anlage an der umlaufenden Führung (44) angeordnet ist.

5. Filterelement nach einem der vorhergehenden Ansprüche, wobei der Deckel einen Ablauf (34) zum Leerlaufen des Filterelements (10) bei einer Entnahme aus der Aufnahme (102) des Filtersystems (100) aufweist.

6. Filterelement nach einem der vorhergehenden Ansprüche, wobei der Verbindungsbereich (17) in radialer Richtung (42) außerhalb des Ablaufs (34) auf der Reinseite (26) angeordnet ist.

7. Filterelement nach einem der vorhergehenden Ansprüche, wobei der Verbindungsbereich (17) in radialer Richtung (42) außerhalb eines Innendurchmessers (15) des Filterkörpers (14) angeordnet ist.

8. Verwendung des Filterelements nach einem der vorhergehenden Ansprüche zum Filtern von Öl.

9. Verwendung des Filterelements nach einem der vorhergehenden Ansprüche 1-7 zum Filtern von Kraftstoff.

10. Filtersystem (100) mit einem Filterelement (10) nach einem der vorhergehenden Ansprüche, 1-7 wobei das Filterelement (10) mit einem Verbindungsbereich (17) wechselbar mit einer Aufnahme (102) des Filtersystems (100) verbunden ist und wobei ein Einlass (106) auf einer Rohseite (22) vorgesehen ist, der mit dem Einlass (20) des Filterelements (10) verbunden ist, sowie ein Auslass (108) vorgesehen ist, der mit dem Auslass (24) des Filterelements (10) auf einer Reinseite (26) verbunden ist.

11. Filtersystem nach Anspruch 10, wobei eine aufnahmeseitige Dichtfläche (110) an der Aufnahme (102) des Filtersystems (100) angeordnet ist, die zur Anlage einer zweiten Dichtungsfläche (32) der Dichtung (28) vorgesehen ist.

## Claims

1. Filter element (10) for filtering a fluid, comprising a housing (12), a filter body (14) disposed in the housing (12), a cover (16) closing the housing (12), wherein at least one inlet (20) is disposed on the cover (16) on a raw side (22) for admitting a fluid into the filter element (10) and an outlet (24) is disposed on a clean side (26) for discharging the fluid from the filter element (10), wherein a connecting area (17) for connecting the filter element (10) to a counterpart (101) of a filter system (100) and a sealing area (27) between the filter element (10) and a receptacle (102) of the filter system (100) are provided on the cover (16), and at least one circumferential seal (28) is provided for sealing the connecting area (17), wherein the seal (28) features at least two separate sealing surfaces (30, 32) which have a sealing effect in the axial and radial directions (40, 42), **characterized in that** the seal (28) features an area (29) with a substantially oval cross-section and is guided by a circumferential guide (44) in the axial and radial directions (40, 42), which closes tightly with a collar (46) of the housing (12), wherein the seal (28), viewed in the radial direction (42), is convex on one side and substantially flat on the opposite side, wherein the flat side of the seal (28) rests against the guide (44) and the convex side of the seal is compressible via two sealing surfaces running obliquely to one another.

2. Filter element according to claim 1, wherein the seal (28), adjacent to the substantially oval area (29), features a collar (36) extending in an axial direction (40).

3. Filter element according to claim 1 or 2, wherein the connecting area (17) comprises a thread (18).

4. Filter element according to one of the preceding claims, wherein a first sealing surface (30) is disposed for contact with the circumferential guide (44).

5. Filter element according to one of the preceding claims, wherein the cover features a drain (34) for draining the filter element (10) when it is removed from the receptacle (102) of the filter system (100).

6. Filter element according to one of the preceding claims, wherein the connecting area (17) is disposed in the radial direction (42) outside the outlet (34) on the clean side (26).

7. Filter element according to one of the preceding claims, wherein the connecting area (17) is disposed in the radial direction (42) outside an internal diameter (15) of the filter body (14).

8. Use of the filter element according to one of the above claims for filtering oil.

9. Use of the filter element according to one of the claims 1 to 7 for filtering fuel.

10. Filter system (100) with a filter element (10) according to one of the preceding claims 1 to 7, wherein a connecting area (17) of the filter element (10) is exchangeably connected to a receptacle (102) of the filter system (100) and wherein an inlet (106) connected to the inlet (20) of the filter element (10) is provided on a raw side (22), as well as an outlet (108) connected to the outlet (24) of the filter element (10) is provided on a clean side (26).

11. Filter system according to claim 10, wherein a sealing surface (110) on the receiving side is disposed on the receptacle (102) of the filter system (100) and provided to abut a second sealing surface (32) of the seal (28).

## Revendications

1. Élément filtrant (10) destiné à filtrer un fluide, comprenant un boîtier (12), un corps de filtre (14) disposé dans le boîtier (12), un couvercle (16) obturant le boîtier (12), au moins une entrée (20) étant disposée sur le couvercle (16) d'un côté brut (22) afin de faire pénétrer un fluide dans l'élément filtrant (10) et une sortie (24) étant disposée sur un côté filtré (26) afin de faire écouler le fluide de l'élément filtrant (10), une zone de jonction (17) étant prévue sur le couvercle (16) pour relier l'élément filtrant (10) à un contre-élément (101) d'un système de filtre (100) et une zone d'étanchéité (27) étant prévue entre l'élément filtrant (10) et un logement (102) du système de filtre (100), et au moins un joint circulaire (28) étant prévu pour étancher la zone de jonction (17), le joint (28) comportant au moins deux surfaces d'étanchéité (30, 32) séparées ayant un effet étanchant en sens axial et radial (40, 42), **caractérisé en ce que** le joint (28) comporte une zone (29) avec une section essentiellement ovale et est guidé en sens axial et radial (40, 42) par un guide (44) circulaire qui forme un assemblage étanche avec un collet (46) du boîtier (12), le joint (28) étant exécuté, considéré en sens radial (42), de manière convexe d'un côté et de manière essentiellement plate du côté opposé, le côté plat du joint (28) touchant le guide (44) et le côté convexe du joint pouvant être pressé au moyen de deux surfaces d'étanchéité évoluant de manière oblique l'une par rapport à l'autre.

2. Élément filtrant selon la revendication 1, le joint (28) comportant de façon adjacente à la zone (29) essentiellement ovale un collet (36) évoluant en sens axial (40).

3. Élément filtrant selon la revendication 1 ou 2, la zone de jonction (17) étant pourvue d'un filet (18).

4. Élément filtrant selon l'une des revendications précédentes, une première surface d'étanchéité (30) étant disposée de manière à toucher le guide (44) circulaire.

5. Élément filtrant selon l'une des revendications précédentes, le couvercle comportant un écoulement (34) destiné à vider l'élément filtrant (10) lors de son retrait du logement (102) du système de filtre (100).

6. Élément filtrant selon l'une des revendications précédentes, la zone de jonction (17) étant disposée en sens radial (42) en dehors de l'écoulement (34) du côté pur (26).

7. Élément filtrant selon l'une des revendications précédentes, la zone de jonction (17) étant disposée en sens radial (42) en dehors d'un diamètre intérieur (15) du corps de filtre (14),

8. Utilisation de l'élément filtrant selon l'une des revendications précédentes, pour filtrer de l'huile.

9. Utilisation de l'élément filtrant selon l'une des revendications 1 à 7, pour filtrer du carburant.

10. Système de filtre (100) avec un élément filtrant (10) selon l'une des revendications précédentes 1 à 7, une zone de jonction (17) de l'élément filtrant (10) étant reliée de façon échangeable à un logement (102) du système de filtre (100) et une entrée (106) reliée à l'entrée (20) de l'élément filtrant (10) étant prévue d'un côté brut (22), et une sortie (108) reliée à la sortie (24) de l'élément filtrant (10) étant prévue d'un côté pur (26).

11. Système de filtre selon la revendication 10, une surface d'étanchéité (110) côté logement prévue pour être mise en contact avec une seconde surface d'étanchéité (32) du joint (28) étant disposée sur le logement (102) du système de filtre (100).
